# EUROPEAN PATENT APPLICATION

(11) **EP 1 873 682 A2**
(43) Date of publication of application: **02.01.2008**
(21) Application number: 07012683.4
(22) Date of filing: 28.06.2007
(51) Int. Cl.: G06K 7/00

(54) **System and method for obtaining information from objects provided with bar codes and RFID tags**

(30) Priority: 30.06.2006 US 818037 P
(71) Applicant: SIEMENS AKTIENGESELLSCHAFT, 80333 München (DE)
(72) Inventor: Rosenbaum, Walter, 75116 Paris (FR); Peters, Heinz-Peter, 91154 Roth-Pfaffenhofen (DE); Ramadhin, Kai, 90408 Nürnberg (DE); Becker, Lothar, 91077 Neunkirchen (DE); Brütt, Jörn, 90408 Nürnberg (DE)
(74) Representative: Hellebrandt, Martin

(57) **Abstract**

In a system for obtaining information from a data carrier (2) provided on an object (8) to be transported by a conveyor (1) at a conveying speed, a first reading device (4) is positioned in proximity to the conveyor (1) and configured to employ at least one first technology to obtain information from the data carrier (2) on the object (8). A second reading device (6) is positioned in proximity to the conveyor (1) and configured to employ a second technology to obtain information from the data carrier (2). The second reading device (6) is movable substantially parallel to and synchronously with the object (8) between a start position and an end position, wherein the second reading device (6) is configured to be activated between the start position and the end position.

## Description

The various embodiments described herein generally relate to systems for handling objects. More particularly, the various embodiments relate to a system and method for obtaining information provided on the objects.

Exemplary object handling systems are used at airports and mail processing sites. At airports, for example, check-in personnel applies a bar-coded luggage tag as a data carrier to each luggage piece that is used to track, log and/or authenticate the luggage piece in an effort to improve the productivity and reliability of luggage handling. Similarly, at a mail processing site, mail items (e.g., parcels), trays and sacks carry bar-coded labels as data carriers that are used to track and trace the mail items, trays and sacks to improve the intralogistics. In these applications, the information linked to a bar code may be supplemented with human-readable information (e.g., passenger name or destination city).

In the course of handling these objects, bar code readers attempt to scan the bar code on each object. The bar code readers are installed in proximity to a conveying system that transports the objects from one handling site to another handling site. As is known in the art, bar code readers require unobstructed line of sight to the barcode. When such unobstructed line of sight is not possible multi-sided barcode reader arrays are installed that position individual bar code readers at every possible angle of inspection to isolate and read a barcode. Such barcode reading arrays may have up to 12 separate reading heads, which adds to the cost and complexity of such line of sight optical methods. Further, such barcode readers may have frequent no-reads, e.g., due to a bent, marred or poorly printed barcode label.

To improve the tracking and tracing of items, electronic identification devices, such as radio frequency identification tags (hereinafter referred to as RFID tags), can be applied as data carriers to such items. JP 2005263471 discloses an RFID tag applied to a luggage piece, whereas details as to radio frequency tagging of luggage are described in ISO 18000-6 B,C and IATA Recommended Practice RP1740c. WO 200E/012997 discloses an RFID tag applied to a tray for postal items. The general RFID application in the area of mail processing and operational problems encountered therein are described in Postal Technology Magazine, March 2006, page 31. Similar to the above-mentioned bar code readers, electronic antenna devices are installed in proximity to a conveying system to obtain information from the RFID tags on the objects. The electronic antenna devices may be referred to as RFID readers. Advantageously, this RFID technology does not require unobstructed line of sight to the RFID tag.

A general problem of using RFID tags and RFID readers is transmission collision that may occur when the RFID reader comes into too close a contact with several RFID tags, and activates these RFID tags so that all respond to the emitted RFID reader signal. Therefore, it cannot be ensured that only information of the RFID tag of the currently object of interest is processed. To minimize the problem of transmission collision U.S. Patent No. 6,097,301 describes a hand-mounted RFID reader to reduce the distance between the antenna and the RFID tag. Another approach is to automatically reduce the power when multiple RFID tags are detected until only one RFID tag response remains, as described in U.S. Patent No. 6,097,301. A further approach is in particular suitable when objects are transported on a conveyor. According to that approach, a tunnel is used to isolate individual items while they pass an RFID reader to cause their RFID tags to emit response signals.

Obtaining information from data carriers on objects typically handled in these conveying systems is subject to the productivity requirements of these systems. Productivity in such systems is a function of the conveyance speed and the separation between items. The closer the objects are positioned and the higher the conveyance speed, the greater the potential throughput of the material handling system.

Increasing the speed is limited by technical constraints. For example, if the speed is increased the tunnel in the above-mentioned approach needs to be lengthened to ensure adequate time to expose the objects to radiation to cause the RFID tags to respond. However, the longer tunnel enforces greater separation between items that in turn erodes throughput.

Accordingly, a need exists for an improved way of obtaining information from data carriers provided on objects transported by a conveying system. As objects may be provided with different kinds of data carriers, such as bar codes and electronic identification (ID) devices, any improvement should be suitable for different kinds of data carriers. Further, the objects should be transported at as high a speed as possible and with a minimal spacing between the objects to maximize the system's throughput.

Accordingly, one aspect involves a system for obtaining information from a data carrier provided on an object to be transported by a conveyor at a conveying speed. A first reading device is positioned in proximity to the conveyor and configured to employ at least one first technology to obtain information from the data carrier on the object. A second reading device is positioned in proximity to the conveyor and configured to employ a second technology to obtain information from the data carrier. The second reading device is movable substantially parallel to and synchronously with the object between a start position and an end position, wherein the second reading device is configured to be activated between the start position and the end position.

Another aspect involves a method of obtaining information from a data carrier provided on an object transported by a conveyor of a system having a first reading device positioned in proximity to the conveyor and configured to employ at least one first technology to obtain information from the data carrier, and a second reading device positioned in proximity to the conveyor and configured to employ a second technology to obtain information from the data carrier. The method determines if the second reading device is enabled. When the second reading device is enabled, the second reading device is activated to move substantially parallel to and synchronously with the object from a start position to an end position, to emit a polling signal adapted for a communication with the data carrier, and to receive any response signal from the data carrier.

The novel features and method steps characteristic of the invention are set out in the claims below. The invention itself, however, as well as other features and advantages thereof, are best understood by reference to the detailed description, which follows, when read in conjunction with the accompanying drawings, wherein:
- Figs. 1A-1B: show a schematic illustration of one embodiment of a system for obtaining information from a data carrier using bar code and RFID technologies;
- Fig. 2: shows a further embodiment of the hybrid bar code/RFID system of Figs. 1A-1B having multiple reading zones;
- Figs. 3A-3C: show another embodiment of a hybrid bar code/RFID system using an RF shielding device;

- Fig. 4: shows a further embodiment of a hybrid bar code/RFID system having reading devices arranged in a loop; and
- Fig. 5: shows another embodiment of a hybrid bar code/RFID system having reading devices arranged in two loops.

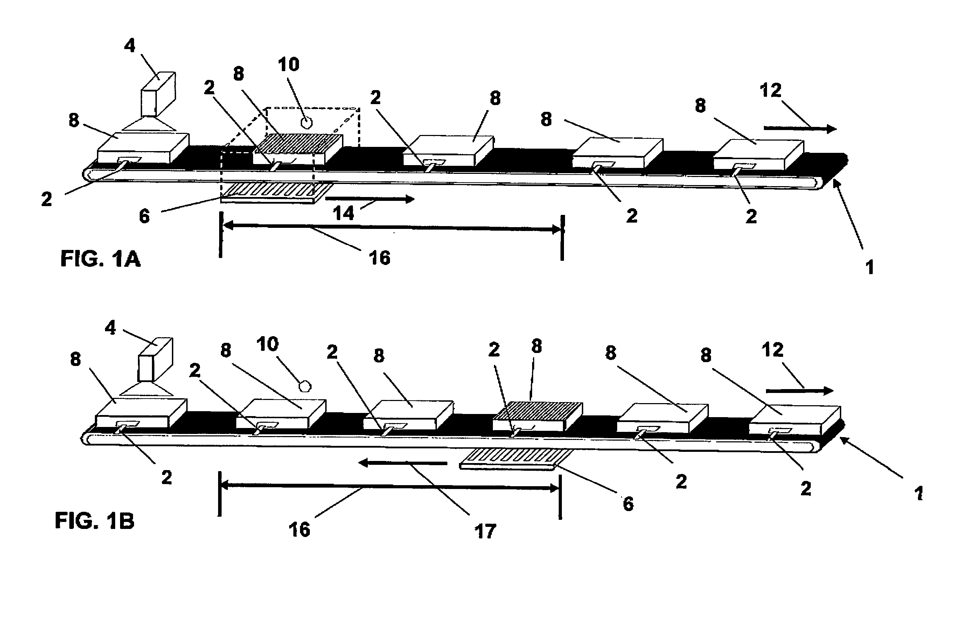

Figs. 1A and 1B show a schematic illustration of one embodiment of a system in which various technologies are used to obtain information from at least one data carrier 2 provided on an object 8. Fig. 1A depicts a first operational stage and Fig. 1 B a second operational stage of the system. A conveyor 1 includes a belt to transport the objects 8 along a conveying direction, as indicated by an arrow 12, which points to the right side in Figs. 1A and 1B. These figures show several objects 8 placed on the conveyor 1. The conveyor 1 transports the objects passed a detector 10 (e.g., a light barrier) and first and second reading devices 4, 6. A reading zone 16 having a length of about 1 - 2 m is assigned to the second reading device 6. It is contemplated that the conveyor 1, the detector 10 and the reading devices 4, 6 are coupled to at least one controller (not shown) that controls the operation of the system and is in communication with a data processing unit.

In Figs. 1A and 1B, as well as in the other figures, the objects 8 are luggage pieces (e.g., suitcases) processed by a material handling system, for example, operated in an airport. In another embodiment, the objects 8 may be mail items (e.g., parcels, trays or mail sacks) processed by a mail processing system. However, it is contemplated that the invention is not intended to be limited to a particular kind of object 8.

The data carrier 2 is in one embodiment a standard airline baggage tag an airport/airline employee attaches to a luggage piece (object 8) during a passenger check-in procedure. Such a baggage tag includes human-readable information (e.g., destination airport, flight number and passenger name) and a bar code. In addition, the baggage tag includes a conventional electronic identification (ID) tag that may be embedded in the baggage tag or affixed to the baggage tag as a separate ID tag patch. An advantage of having the ID tag on the baggage tag is that a passenger can remove the ID tag together with the baggage tag to avoid future destination confusion or ambiguity. However, it is contemplated that the ID tag need not be provided on such a baggage tag, but may be attached directly to the object 8. In some circumstances the ID tag may be reusable such as permanently embedded into a luggage piece.

The ID tag stores an identification number that may be related to a database record. Depending on a particular application, the ID tag may further store information related to the object 8 that carries that ID tag. For an airport application, for example, the information may include passenger name, flight number, flight destination, etc. For a postal application, the information may include the destination city or country of a mail item, or the complete or partial destination address of the mail item. In mail handling or similar operations, the ID tag may be embedded in a tray, attached to a removable tray label, or integral to the label. As is known in the art, this information may be written to the ID tag during a passenger check-in procedure (airport application), or after the first reading of a parcel's destination address (postal application).

The first reading device 4 is in one embodiment configured to read/scan a bar code on the data carrier 2. Accordingly, the first reading device 4 includes at least one conventional bar code reader positioned to have line of sight to the object 8. In the illustrated embodiment, the bar code reader is positioned above the conveyor 1 to read those bar codes visible from above. It is contemplated that in another embodiment the first reading device 4 may include more than one bar code reader and that these bar code readers may be positioned at different angles with respect to the conveyor 1 to cover a wider viewing field. For example, the bar code readers may be positioned laterally to read bar codes that are only visible from the side. Further, the bar code readers may be positioned to read bar codes on leading or trailing sides of the object 8.

In another embodiment, the first reading device 4 includes equipment configured for recognizing optical characters on the data carrier 2. Such optical character recognition (OCR) equipment is known, for example, from postal applications where OCR readers are used to determine address elements on mail items. In yet another embodiment, the first reading device 4 includes a combination of OCR equipment and at least one bar code reader.

The second reading device 6 is in one embodiment configured to obtain information from an electronic ID tag on the data carrier 2. Accordingly, the second reading device 6 is based on wireless technology, e.g., RFID technology, and includes at least one antenna and associated electronics. The electronic ID device is in that embodiment an RFID tag. Without intending to limit the invention to RFID technology, the electronic ID device is hereinafter referred to as RFID tag.

The second reading device 6 is in the illustrated embodiment mounted below the conveyor 1, as only an RF communication between the RFID tag and the second reading device 6 is needed, but no line of sight. It is contemplated that the second reading device 6 may be positioned at any other location along the conveyor 1, for example, above or lateral on at least one side of the conveyor 1.

At least within the reading zone 16, the conveyor 1 is configured to be transparent to RF signals emitted by the second reading device 6 and the RFID tag. The conveyor's belt is usually made of a material transparent to RF signals, such as a synthetic material or rubber. In addition, the conveyor 1 includes in the reading zone 16 a minimum of metallic elements or components that may block or disturb the RF signals. For example, drive wheels, side rails, supports and structural crossmembers are in one embodiment made of a non-metallic material, and commercially available from Globe Composite Solutions, Ltd., USA.

Within the reading zone 16, the second reading device 6 is moveable parallel to the conveyor 1 from a start position (Fig. 1A) in direction of an arrow 14 to an end position (Fig. 1B), and back to the start position, as indicated by an arrow 17. The detector 10 is positioned next to the start position of the second reading device 6.

The second reading device 6 includes in one embodiment a platform having a width adapted to a width of the conveyor 1. For example, the platform's width may be about the same as the conveyor's width. However, in other embodiments the platform's width may be smaller or wider than the conveyor's width. Generally, the platform's width is selected to position the at least one antenna so that all data carriers 2 come within reach of a polling signal emitted by the at least one antenna, regardless if a data carrier 2 is on a relatively small or large object 8.

The platform is in one embodiment mounted to a guide operated by a linear drive motor. Upon activation, the linear drive moves the reading device at a speed synchronous to the conveyor 1 and is in particular positioned under the object 8 as it transits the reading zone 16.

As to the operation of one embodiment of the system, the system first attempts to read the bar coded tag on the object 8 using the overhead bar code reader of the first reading device 4. When the bar code on the object 8 is not read by the bar code reader, i.e., the first reading device 4 failed to obtain information from the data carrier 2, the system provides for a second chance for obtaining information from the data carrier 2 by means of the second reading device 6.

Once the object 8 passed the first reading device 4, the object 8 reaches the detector 10, for example, when the object 8 is centered over the platform. In one embodiment, the detector 10 is configured to activate the second reading device 6 only when the first reading device 4 failed to obtain information from the data carrier 2. In that embodiment, the detector 10 generates a signal that activates the second reading device 6. In the drawings, the object 8 the second reading device 6 is going to poll is indicated by means of a hatching.

Once activated, the second reading device 6 emits a polling signal, and detects any response signal from an RFID tag on the data carrier 2. The platform is accelerated from the start position (V = 0) to a speed corresponding to a conveying speed (e.g., V = 3 m/s) at which the conveyor 1 transports the objects 8. Within the reading zone 16, the second reading device 6 moves synchronously with the object 8 that triggered the process. Advantageously, as the object 8 and the second reading device 6 travel parallel to each other within the reading zone 16, sufficient time is available for the second reading device 6 to energize the RDIF tag on the object's data carrier 2 and to receive a response signal from this RFID tag. When the second reading device 6 reaches the end position, the second reading device 6 is decelerated to a complete stop (V = 0), deactivated and returned to the start position.

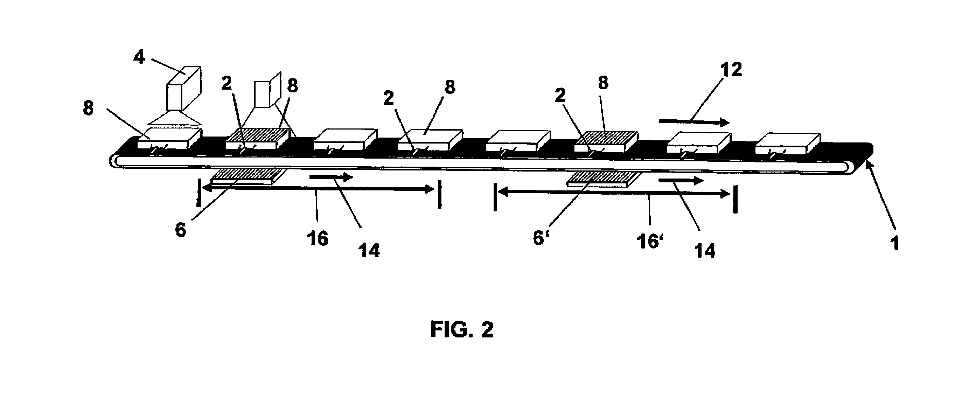

Because the second reading device 6 needs to be repositioned back through the reading zone 16 to its starting position, two consecutive objects 8 cannot be processed. Therefore, in one embodiment shown in Fig. 2, the system includes a second reading zone 16' to which a further second reading device 6' is assigned. The second reading device 6' is positioned further down the conveyor 1 in direction of travel, and operates similar to the second reading device 6 to obtain information from the data carrier 2. The second reading devices 6, 6' assigned to the reading zones 16 and 16' can be used selectively, e.g., alternatingly, when objects 8 failed to be resolved by the first reading device 4.

In Figs. 1A and 1 B, the first reading device 4 is arranged outside the reading zone 16. However, it is contemplated that in other embodiments the first reading device 4 may be arranged within the reading zone 16. In such an embodiment, both reading devices 4, 6 attempt to obtain information from the data carrier 2. The information obtained by these reading devices 4, 6, assuming both were able to obtain information, may then be used, for example, for a consistency check.

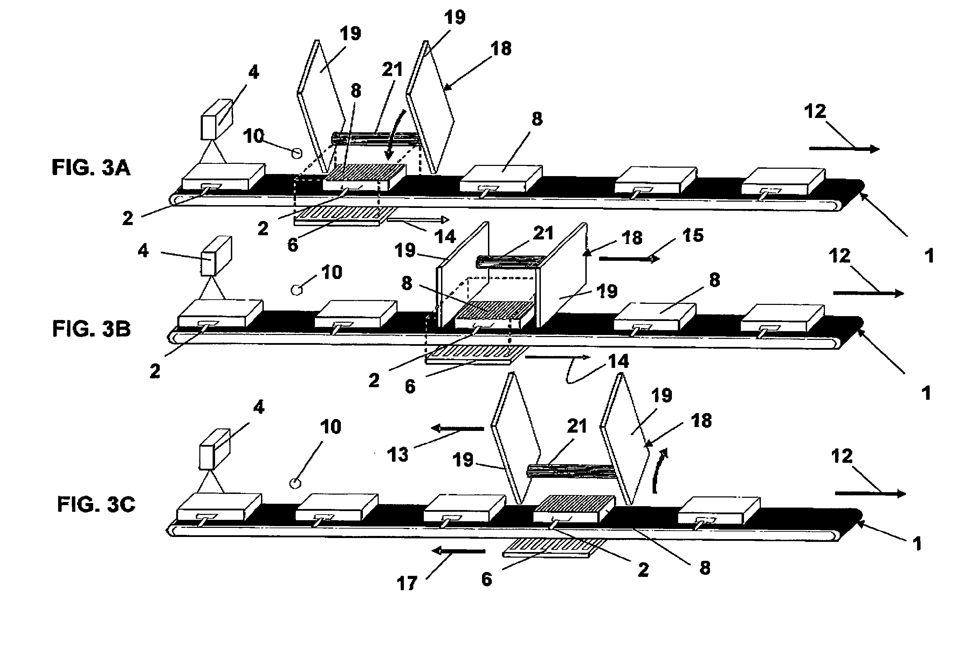

Figs. 3A, 3B and 3C illustrate a further embodiment of a system in which various technologies are used to obtain information from at least one data carrier 2 provided on an object 8. The basic operation of this embodiment corresponds to the operation described above with respect to Figs. 1A and 1B. In addition to the above-described features and functionalities, the system includes at least one shielding device 18 arranged next to the conveyor 1. The shielding device 18 is configured to move between a raised position (Fig. 3A) and a lowered position (Fig. 3B), and between a start position (Fig. 3A) and an end position (Fig. 3C). The shielding device 18 is operationally coupled to the second reading device 6 and moves synchronously with the second reading device 6, wherein both devices 6, 18 have in one embodiment the same start and end positions.

The antenna (or antennas) of the second reading device 6 is set to emit a low-power (short-distance) polling signal and to poll only the RFID tag of the object 8 (shown with hatching) that is currently located above the second reading device 6. However, under certain circumstances, for example, when the objects 8 are too close to each other on the conveyor 1, more than one RFID tag may respond so that the second reading device 6 may receive not only a response signal from the above RFID tag, but also from neighboring RFID tags. This may lead to signal collision. The shielding device 18 is configured to prevent the polling signal to leak beyond the currently polled object 8 of interest. For that purpose, the shielding device 18 is made of an RF radiation blocking material, such as metal.

In one embodiment, the shielding device 18 has two elements 19 mounted to an axle 21 that extends parallel to the conveyor 1. As illustrated, the elements 19 are parallel to each other, and extend in vertical direction and transverse to the conveyor 1. The axle 21 is rotatable to move the elements 19 from the raised position (Fig. 3A) to the lowered position (Fig. 3B), and back to the raised position (Figs. 3A, 3C). Further, the axle 21 is moveable in direction of the conveyor 1 (arrow 15) to move upon activation synchronously with the second reading device 6 from the start position (arrows 14, 15) to the end position, and back to the start position (arrows 13, 17). In one embodiment, the shielding device 18 is activated essentially at the same time the signal from the detector 10 activates the second reading device 6.

It is contemplated that the shielding device 18 is not limited to the illustrated embodiment. In other embodiments, the shielding device 18 may have elements that move horizontally in and out between the objects 8 so that the object 8 of interest is placed between the elements. In another embodiment, the shielding device 18 may have more than two elements to prevent RF radiation from leaking into undesired directions.

Further, in one embodiment, at least one antenna may be mounted to at least one of the elements 19 of the shielding device 18, for example, to a trailing element 19. This allows covering additional sides of the object 8 to be exposed to RF radiation. Such an antenna may be used for "reading" the RFID tag on the object 8, and for "writing" to the RFID tag. It is writing that tends to be even more problematic than reading at typical conveyor speeds. In addition, by placing the at least one antenna on an upper part of the trailing element 19, any RF leakage will hit and get responses from an RFID tag that has already been recognized, and, hence, its return signal can be unambiguously delineated from the RFID currently being polled or written to.

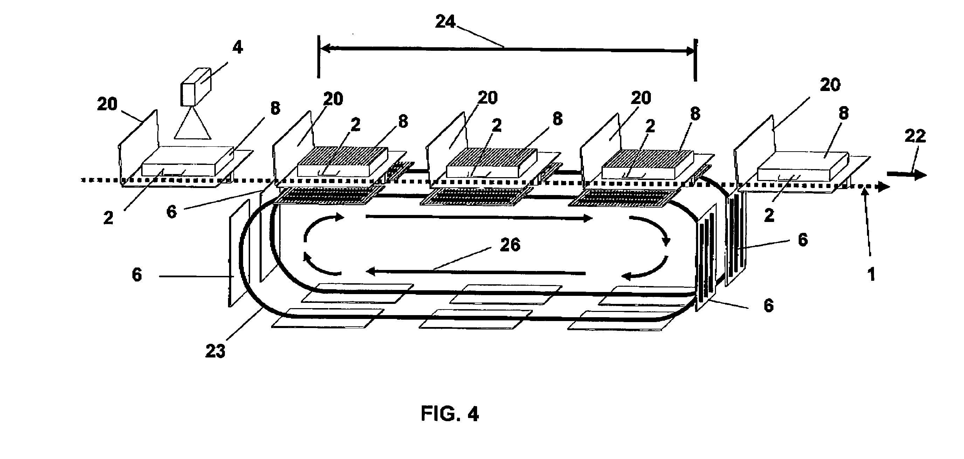

Fig. 4 illustrates a further embodiment of a system in which various technologies are used to obtain information from at least one data carrier 2 provided on an object 8. In the illustrated embodiment, the conveyor 1 includes individual trays 20 mounted on a guide 1a and spaced from each other, for example, equally spaced at a predetermined distance from each other. Each tray 20 transports an object 8 along a conveying direction, as indicated by an arrow 22. The first reading device 4 is positioned above the conveyor 1 and operates as described above.

In the embodiment of Fig. 4, the system includes several second reading devices 6 arranged on a transport system 23. In the illustrated embodiment, the second reading devices 6 are arranged in pairs. Each pair includes two platforms that extend on both sides of the guide 1 a to cover at least the width and/or the length of the tray 20. However, it is contemplated that forming such pairs is not required. The two platforms may be part of one second reading device 6. Further, each second reading device 6 may be arranged on the transport system 23 so that the second reading device 6 covers at least the width and/or the length of the tray 20.

In one embodiment, each platform carries at least one antenna. As in the embodiments described above, RF signals emitted by the second reading devices 6 and the RFID tags are ideally not disturbed by the conveyor 1 and the trays 20. For example, the trays 20 may be made of a material transparent to RF signals, for example, a synthetic material.

The transport system 23 is positioned below the conveyor 1 and configured to rotate the pairs of second reading devices 6 along a loop. As the trays 20 move in Fig. 4 from left to right, the transport system 23 rotates the pairs of second reading devices 6 clockwise, as indicated by an arrow 26, at a speed that corresponds to the speed of the conveyor 1. In operation the transport system 23 moves the pairs of second reading devices 6 in and out of a reading zone 24. Along the illustrated loop, the pairs of second reading devices 6 approach the trays 20 at the beginning of the reading zone 24 moving upwards, travel parallel to the conveyor 1 while passing through the reading zone 24, and move away from the conveyor 1 when leaving the reading zone 24 to descend to be fed back to the beginning of the reading zone 24.

Each pair of second reading devices 6 is configured to poll the RFID tag of one object 8 only while in the reading zone 24. At least within the reading zone 24, the pairs of second reading devices 6 are spaced from each other to have the same spacing as the trays 20. The transport system 23 moves the pairs of second reading devices 6 synchronously with the trays 20. That is, in the reading zone 24 a pair of second reading devices 6 travels underneath the tray 20 and is activated to poll the RFID tag on the processed object 8. Activated reading devices 6 and processed objects 8 are indicated by means of hatching.

In the illustrated embodiment, the circular motion of the second reading devices 6 attached to circular transport system 23 is synchronized with the trays 20. However, it is contemplated that in another embodiment the trays 20 may be replaced by a conventional conveyor, e.g., conveyor 1, and benefit could still be accrued of having continuous coverage for consecutive objects 8 not read by the first reading device 4 (bar code reader) without requiring dual reading areas as shown in Figure 2.

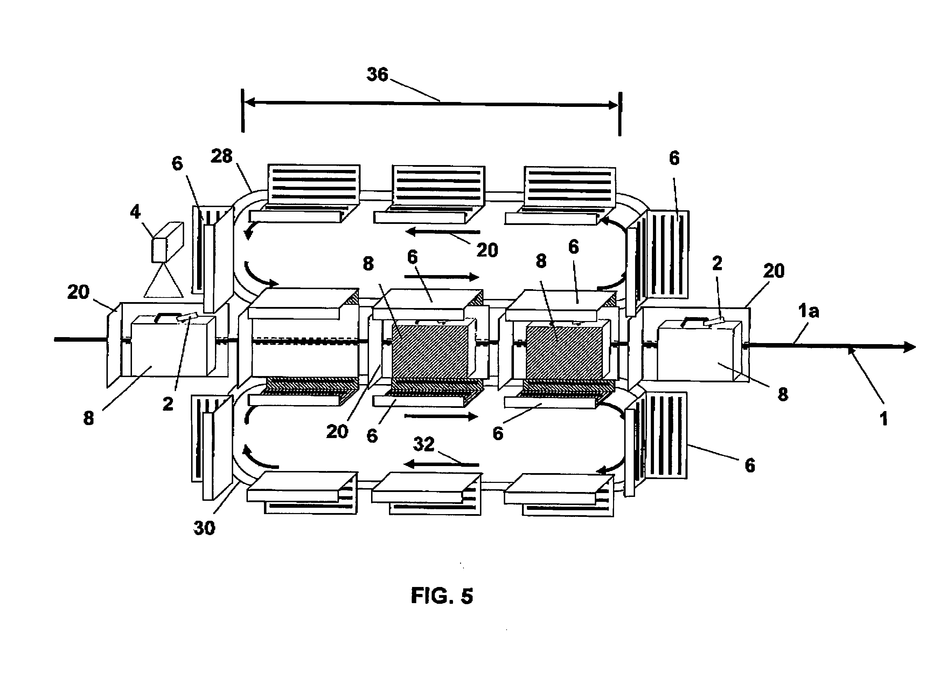

Fig. 5 illustrates another embodiment of a system in which various technologies are used to obtain information from at least one data carrier 2 provided on an object 8. Similar to the embodiment of Fig. 4, the conveyor 1 includes individual trays 20 mounted on a guide 1a and spaced from each other, for example, at a predetermined distance. The conveyor 1 and the first reading device 4 operate as described above.

In the embodiment of Fig. 5, the system includes several second reading devices 6 arranged on both sides of the conveyor 1 in two loops formed by transport systems 28, 30. The transport system 28 rotates the second reading devices 6 counterclockwise, as indicated by an arrow 34, whereas the transport system 30 rotates the second reading devices 6 clockwise, as indicated by an arrow 32. Both loops extend in this embodiment in a substantially horizontal plane.

However, it is contemplated that in another embodiment the second reading devices 6 may be arranged on one side of the conveyor 1. Each second reading device 6 may be arranged on the transport system 28 (30) so that the second reading device 6 covers at least the width and/or the length of the tray 20.

In operation the transport systems 28, 30 moves the second reading devices 6 in and out of a reading zone 36. Along each one of the illustrated loops, the second reading devices 6 approach the trays 20 at the beginning of the reading zone 36 and form pairs of second reading devices 6. It is contemplated that each pair is viewed as one second reading device 6. The second reading devices 6 are shaped so that each pair at least partially extends along lateral sides of a tray 8 including the object 8 placed thereon while in the reading zone 36. In Fig. 5, each pair partially encloses an object 8. The pairs travel parallel to the conveyor 1 while passing through the reading zone 36. At the end of the reading zone 36 the second reading devices 6 of each pair separate and move along the respective loop.

Each second reading device 6 has a bottom plate and a side wall that are in one embodiment connected at a corner, e.g., at a right angle. In addition, each second reading device 6 may have a top plate connected to the side wall, e.g., at a right angle. The top plate is essentially parallel to the bottom plate, but may be substantially smaller to allow bulky objects 8 to extend upwards without interfering with the second reading devices 6. The bottom plate is sized to extend within the reading zone 36 from a lateral side about halfway underneath a tray 20. Further, the bottom plate, the side wall and any top plate are sized to have about the same length (in conveying direction) as the trays 20.

As in the embodiments described above, RF signals emitted by the second reading devices 6 and the RFID tags are ideally not disturbed by the conveyor 1 and the trays 20. For example, the trays 20 may be made of a material transparent to RF signals, for example a synthetic material.

Each second reading device 6 has at least one antenna coupled to RFID electronics. The at least one antenna extends in the illustrated embodiment over the bottom plate and the side wall. However it is contemplated that the bottom plate and the side wall may each have at least one antenna (antenna element) that are coupled to the RFID electronics to be driven at the same time. Similarly, any top plate may be provided with an antenna.

In the illustrated embodiment of Fig. 5, the second reading devices 6 are activated only within the reading zone 36, again indicated by means of hatching. Activation of the respective antennas occurs when an object 8 is determined to have been placed on a tray 20. Alternatively, the second reading device 6 can be activated regardless of whether or not an object 8 is on the tray 2. In this embodiment, a sensor that triggers operation of the second reading devices 6 may be omitted. For illustrative purposes, Fig. 5 shows all second reading devices 6 within the reading zone 36 as being activated even though one tray 20 is empty.

It is apparent that there has been disclosed a system and method for obtaining information from a data carrier 2 provided on an object 8 transported by a conveyor 1 that fully satisfy the objects, means, and advantages set forth hereinbefore. For example, the various embodiments described herein improve the identification process related to reading bar coded and RFID tagged objects, and optimize the design costs of a recognition system by using bar code technology for its optimal recognition domain and RFID technology for its optimal characteristics. Advantageously, the gap between objects 8 being recognized by RFID technology can be reduced, and restraints caused by using an RF shielding tunnel are removed. The power emitted by the second reading device 6 can be reduced to lessen interference between neighboring objects 8. Furthermore, the dwell time in which the second reading device 6 can energize and poll the RFID tag on an object 8 increases.

## Claims

1. A system for obtaining information from a data carrier (2) provided on an object (8) to be transported by a conveyor (1) at a conveying speed, comprising:
a first reading device (4) positioned in proximity to the conveyor (1) and configured to employ at least one first technology to obtain information from the data carrier (2) on the object (8); and
a second reading device (6) positioned in proximity to the conveyor (1) and configured to employ a second technology to obtain information from the data carrier (2), wherein the second reading device (6) is movable substantially parallel to and synchronously with the object (8) between a start position and an end position, and wherein the second reading device (6) is configured to be activated between the start position and the end position.

2. The system of Claim 1, further comprising a detector (10) positioned in proximity of the start position to detect a presence of the object (8) and to trigger activation of the second reading device (6).

3. The system of Claim 1 or 2, wherein the first technology is at least one of a bar code technology and an optical character recognition technology, and wherein the second technology is a wireless technology.

4. The system of Claim 3, wherein the first reading device (4) is, with respect to a conveying direction, positioned upstream of the second reading device (6).

5. The system of Claim 4, wherein the second reading device (6) is configured to be activated only when the first reading device (4) fails to obtain information from the data carrier (2).

6. The system of any preceding claim, further comprising a further second reading device (6'), with respect to a conveying direction, positioned downstream from the second reading device (6), wherein the second reading devices (6, 6') are configured to be used selectively when the first reading device (4) fails to obtain information from the data carriers (2).

7. The system of any preceding claim, further comprising a shielding device (18) configured to be positioned to at least partially enclose the object (8) when the second reading device (6) is activated.

8. The system of Claim 7, wherein the shielding device (18) includes two elements (19) configured to block electromagnetic radiation, wherein a leading element (19) is configured to be positioned between the object (8) and a preceding object (8), and wherein a trailing element (19) is configured to be positioned between the object (8) and a succeeding object (8).

9. The system of any one of Claims 1 - 5, wherein a plurality of second reading devices (6) is arranged on a transport system (23) positioned in proximity of the conveyor (1) and configured to rotate the second reading devices (6) along a loop in and out of a reading zone (24) so that each second reading device (6) approaches an object (8) on the conveyor (20) at a beginning of the reading zone (24), travels parallel to the object (8) while passing through the reading zone (24), and moves away from the object (8) when leaving the reading zone (24) to be fed back to the beginning of the reading zone (24).

10. The system of any one of Claims 1 - 5, wherein a plurality of second reading devices (6) is arranged on at least one side of the conveyor (1) in at least one loop formed by at least one transport system (28, 30), wherein the at least one transport system (28, 30) is configured to rotate the second reading devices (6) along a loop in and out of a reading zone (36) so that along the loop, a second reading device (6) approaches an object (8) at a beginning of the reading zone (36) and travels parallel to the conveyor (1) while passing through the reading zone (36).

11. A method of obtaining information from a data carrier (2) provided on an object (8) transported by a conveyor (1) of a system comprising a first reading device (4) positioned in proximity to the conveyor (1) and configured to employ at least one first technology to obtain information from the data carrier (2), and a second reading device (6) positioned in proximity to the conveyor (1) and configured to employ a second technology to obtain information from the data carrier (2), the method comprising:
determining if the second reading device (6) is enabled; and
when the second reading device (6) is enabled, activating the second reading device (6)
to move substantially parallel to and synchronously with the object (8) from a start position to an end position,
to emit a polling signal adapted for a communication with the data carrier (2), and
to receive any response signal from the data carrier (2).

12. The method of Claim 11, wherein the second reading device (6) is enabled when the first reading device (4) fails to obtain information from the data carrier (2).

13. The method of Claim 11, wherein the second reading device (6) is continuously enabled.

14. The method of any one of Claims 11 - 13, further comprising repositioning the second reading device (6) to the start position.

15. The method of any one of Claims 11 - 14, further comprising detecting a presence of the object (8) in proximity of the start position, wherein the second reading device (6) is activated when the object (8) is present.

16. The method of any one of Claims 11-15, further comprising activating a further second reading device (6'), with respect to a conveying direction, positioned downstream from the second reading device (6), and using the second reading devices (6, 6') selectively when the first reading device (4) fails to obtain information from the data carriers (2).

17. The method of any one of Claims 11 - 15, further comprising positioning a shielding device (18) to at least partially enclose the object (8) when the second reading device (6) is activated.

18. The method of Claim 17, wherein the positioning of the shielding device (18) includes positioning a leading element (19) between the object (8) and a preceding object (8), and a trailing element (19) between the object (8) and a succeeding object (8).

19. The method of any one of Claims 11 -16, further comprising:
arranging a plurality of second reading devices (6) on a transport system (23) positioned in proximity of the conveyor (1); and
rotating the second reading devices (6) along a loop in and out of a reading zone (24) so that each second reading device (6) approaches an object (8) on the conveyor (20) at a beginning of the reading zone (24), travels parallel to the object (8) while passing through the reading zone (24), and moves away from the object (8) when leaving the reading zone (24) to be fed back to the beginning of the reading zone (24).

20. The method of any one of Claims 11 - 16, further comprising:
arranging a plurality of second reading devices (6) on at least one side of the conveyor (1) in at least one loop formed by at least one transport system (28, 30), and
rotating the second reading devices (6) along a a loop in and out of a reading zone (36) so that along the loop, the second reading devices (6) approach an object (8) at a beginning of the reading zone (36) and travel parallel to the conveyor (1) while passing through the reading zone (36).

21. The method of any one of Claims 11 - 20, wherein the first technology is at least one of a bar code technology and an optical character recognition technology, and wherein the second technology is a wireless technology.
